# EUROPEAN PATENT APPLICATION

(11) **EP 4 095 102 A1**
(43) Date of publication of application: **30.11.2022**
(21) Application number: 21176525.0
(22) Date of filing: 28.05.2021
(51) Int. Cl.: C01G 53/00, H01M 4/131, H01M 4/505, H01M 4/525, H01M 4/1391

(54) **PROCESS FOR MAKING A PARTICULATE ELECTRODE ACTIVE MATERIAL, AND ELECTRODE ACTIVE MATERIAL**

(71) Applicant: BASF SE, 67056 Ludwigshafen am Rhein (DE)
(72) Inventor: LENNARTZ, Michael, 60435 Frankfurt (DE); SOMMER, Heino, 72072 Tübingen (DE); RIEWALD, Felix Florian, 72072 Tübingen (DE); SCHEIFF, Frederik, 67056 Ludwigshafen (DE); EHRHARDT, Karl Rainer, 67056 Ludwigshafen (DE); KIPFER, Tim, 80805 München (DE); BOCK, Moritz, 89231 Neu-Ulm (DE)
(74) Representative: BASF IP Association

(57) **Abstract**

Process for making a particulate compound according to general formula Li₁₊ₓTM₁₋ₓO₂ with x being in the range of from -0.02 to +0.15 and with TM representing nickel and at least one metal selected from Co and Mn and, optionally, including at least one of Al, Mg, Ti, Zr, Nb, Ta, Mo, and W, wherein said process comprises the steps of:
(a) providing a nanoparticulate oxide or (oxy)hydroxide of each of the metals of TM,
(b) mixing the nanoparticulate oxides or (oxy)hydroxides in the stoichiometry targeted for TM under addition of a source of lithium selected from LiOH and Li₂CO₃ and Li₂O₂ and Li₂O, and
(c) treating the mixture from step (c) at a temperature in the range of from 700 to 950°C.

## Description

The present invention is directed towards a process for making a particulate compound according to general formula Li₁₊ₓTM₁₋ₓO₂ with x being in the range of from -0.01 to +0.15 and with TM representing nickel and at least one metal selected from Co and Mn and, optionally, including at least one of Al, Mg, Ti, Zr, Nb, Ta, Mo, and W, wherein said process comprises the steps of:
(a) providing a nanoparticulate oxide or (oxy)hydroxide of each of the metals of TM,
(b) mixing the nanoparticulate oxides or (oxy)hydroxides in the stoichiometry targeted for TM under addition of a source of lithium selected from LiOH and Li₂CO₃ and Li₂O₂ and Li₂O, and
(c) treating the mixture from step (c) at a temperature in the range of from 700 to 950°C.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.

Many electrode active materials discussed today are of the type of lithiated nickel-cobalt-manganese oxide ("NCM materials") or lithiated nickel-cobalt-aluminum oxide ("NCA materials").

In a typical process for making cathode materials for lithium-ion batteries, first a so-called precursor is being formed by co-precipitating the transition metals as carbonates, oxides or preferably as hydroxides that may or may not be basic. The precursor is then mixed with a source of lithium such as, but not limited to LiOH, Li₂O or - especially - Li₂CO₃ - and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1000°C. During the thermal treatment a solid state reaction takes place, and the electrode active material is formed. In cases hydroxides or carbonates are used as precursors the solid state reaction follows a removal of water or carbon dioxide. The thermal treatment is performed in the heating zone of an oven or kiln.

In recent times, so-called monolithic cathode active materials have attracted a lot of attention, ee, e.g., US 2002/0110736 and US 2021/0013506. However, the production process has shortcomings, for example the significant amounts of by-products during the precursor manufacture. In case a precursor is made from nickel sulfate and other sulfates on one hand and sodium hydroxide on the other hand, the amount of sodium sulfate that is produced as a by-product exceeds the amount of precursor.

It was therefore an objective of the present invention to provide a process for making electrode active materials that avoids the above shortcomings. It was further an objective to provide electrode active materials with excellent electrochemical properties in combination with a manufacturing process that leads to a low formation of sulfate containing wastewater.

Accordingly, the process as defined at the outset has been found, hereinafter also referred to as "inventive process". The inventive process comprises the following steps.
(a) providing a nanoparticulate oxide or (oxy)hydroxide of each of the metals of TM,
(b) mixing the nanoparticulate oxides or (oxy)hydroxides in the stoichiometry targeted for TM under addition of a source of lithium selected from LiOH and Li₂CO₃ and Li₂O₂ and Li₂O, and
(c) treating the mixture from step (c) at a temperature in the range of from 700 to 950°C.

The inventive process comprises three steps, (a), (b), and (c), in the context of the present invention also referred to as step (a) and step (b) and step (c), respectively. The inventive process is a process for making a particulate compound according to general formula Li₁₊ₓTM₁₋ₓO₂ with x being in the range of from -0.02 to +0.15, preferably -0.01 to 0.10, and with TM representing nickel and at least one metal selected from Co and Mn and, optionally, including at least one of Al, Mg, Ti, Zr, Nb, Ta, Mo, and W. TM thus includes a combination of Ni and Co or a combination of Ni and Mn or a combination of Ni and Co and Mn.

In addition to nickel and at least one of Co and Mn, TM may include at least one of Al, Mg, Ti, Zr, Nb, Ta, Mo, and W, for example Al and Mg or Al and Zr or Al and Ti or Al and Mg and Ti or Al and Mg and Zr.

In a preferred embodiment of the present invention, TM comprises at least 80 mol-% Ni, more preferably 85 to 98 mol-% Ni and even more preferably 90 to 97 mol-% Ni.

In one embodiment of the present invention, TM corresponds to the general formula (I)

(NiₐCo_{b}Mn_{c})_{1-d}M_{d} (I)

with
a being in the range of from 0.6 to 0.98, preferably from 0.95 to 0.98,
b being in the range of from zero to 0.2, preferably from 0.01 to 0.04,
c being in the range of from zero to 0.25, preferably from 0.01 to 0.04, and
d being in the range of from zero to 0.1,
M is selected from Mg, Al, Ti, Zr, Mo, W, Nb, and Ta,
a + b + c = 1, and b + c > 0.

Some elements are ubiquitous. In the context of the present invention, traces of ubiquitous metals such as sodium, calcium, iron or zinc, as impurities will not be taken into account in the description of the present invention. Traces in this context will mean amounts of 0.005 mol-% or less, referring to the total metal content of TM.

The particulate compound made by the inventive process preferably comprises so-called monolithic particles.

Preferably, the particulate compound available from the inventive process is in the form of agglomerates of primary particles with irregular shape and a mass weighted equivalent diameter in the range of from 0.4 to 3 µm and a span (d90)-(d10) divided by (d50) in the range of from 0.7 to 1.7 and wherein said agglomerates have an irregular shape and an average diameter in the range of from 2 to 10 µm. It will be described in more detail below.

In step (a), a nanoparticulate oxide or (oxy)hydroxide of each of the metals of TM is provided. That means that in case an electrode active material with TM being, e.g., Ni and Co and Al is the target, nanoparticulate oxides or (oxy)hydroxides of nickel and cobalt and aluminum are provided.

In the context of the present invention, the term "nanoparticulate" shall mean that the respective oxide or (oxy)hydroxide is in the form of agglomerates that have an average particle diameter in the range of from 1 to 13 µm, preferably 1 to 10 µm. The average particle diameter refers to the median value, (D50), of aggregated primary particles and may be determined by PSD or SEM. The crystallite size can be calculated quantitatively by Scherrer equation according to the diffraction peak broadening in the XRD diagram. The primary particles preferably have an average particle diameter in the range of from 5 to 100 nm.

The term "(oxy)hydroxide" shall include hydroxides and oxyhydroxides, and neither oxyhydroxide nor (oxy)hydroxide shall be limited to compounds with the same molar share of hydroxide and oxide

Examples of suitable nanoparticulate oxides and (oxy)hydroxides of nickel are NiO, Ni₃O₄, Ni(OH)₂, and so-called "non-stoichiometric" NiOOH, of which NiO is are preferred.

Examples of suitable nanoparticulate oxides and (oxy)hydroxides of cobalt are CoO, Co₂O₃, Co₃O₄, Co(OH)₂, and so-called "non-stoichiometric" CoOOH, of which Co₃O₄ and Co(OH)₂ are preferred.

Examples of suitable nanoparticulate oxides and (oxy)hydroxides of manganese are Mn₂O₃, Mn₃O₄, MnO₂, Ni(OH)₂, and so-called "non-stoichiometric" MnOOH, of which Mn₂O₃ and Mn₃O₄ are preferred.

Examples of suitable nanoparticulate oxides and (oxy)hydroxides of aluminum are Al₂O₃, Al(OH)₃, AlOOH, Al₂O₃·aq, preference being given to AlOOH and Al₂O₃, especially γ-Al₂O₃.

Examples of suitable nanoparticulate oxides and (oxy)hydroxides of magnesium are Mg(OH)₂ and MgO.

Examples of suitable nanoparticulate oxides and (oxy)hydroxides Nb are Nb₂O₃, Nb₂O₅ and niobic acid, Nb₂O₅·H₂O. In niobic acid, the amount of water is not necessarily stoichiometric.

Examples suitable nanoparticulate oxides and (oxy)hydroxides of Ta are Ta₂O₃, Ta₂O₅.

Examples suitable nanoparticulate oxides and (oxy)hydroxides of Mo are Mo(OH)₃, MoO₃, and Li₂MoO₄.

Examples of suitable nanoparticulate oxides and (oxy)hydroxides of W are WO₃, Li₂WO₄.

Examples of suitable nanoparticulate oxides and (oxy)hydroxides of Zr are ZrO₂, ZrO₂·aq, ZrO(OH)₂, and Zr(OH)₄.

Examples of suitable nanoparticulate oxides and (oxy)hydroxides of Ti are TiO₂·aq, TiO₂, TiO(OH)₂, and Ti(OH)₄.

Many of the above nanoparticulate oxides and (oxy)hydroxides are commercially available.

In step (b), said nanoparticulate oxides or (oxy)hydroxides are mixed in the stoichiometry targeted for TM under addition of a source of lithium selected from LiOH and Li₂CO₃ and Li₂O₂ and Li₂O, in one mor more sub-steps. Preferred source of lithium is LiOH. The term LiOH includes hydrates of LiOH such as LiOH·H₂O. It is preferred, though, to remove the water of crystallization of LiOH prior to addition because otherwise, especially in the case of non-stoichiometric hydrates, it is difficult to precisely add the desired amount of lithium.

While in step (b), said nanoparticulate oxides or (oxy)hydroxides are combined in the stoichi ometry targeted for TM, it is preferred to add more source of lithium than required for the targeted particulate oxide because in many embodiments, a certain loss of lithium is observed.

Suitable vessels for performing step (b) are, e.g., high-shear mixers, tumbler mixers, plough-share mixers, balls mill, agitating mills, grinding mills, and extruders. In one embodiment of the present invention, step (b) is performed in a ball mill, agitating mill, high-shear mixer, or in an extruder.

Step (b) may be performed at any temperature in the range of from zero to 100°C, ambient temperature being preferred.

In one embodiment of the present invention, step (b) has a duration of 10 minutes to 2 hours. Depending on whether additional mixing is performed in step (e) or not, thorough mixing has to be accomplished in step (b).

Although it is possible to add an organic solvent, for example glycerol or glycol, or water in step (b) it is preferred to perform step (b) in the dry state, that is without addition of water or of an organic solvent.

A mixture is obtained from step (b).

In step (c), the mixture resulting from step (b) is treated thermally at a temperature in the range of from 700 to 950°C.

In one embodiment of the present invention, the mixture from step (b) is heated with a heating rate of 0.1 to 10°C/min.

In one embodiment of the present invention, the temperature is ramped up before reaching the desired temperature of from 550 to 875°C, preferably 650 to 850°C. For example, first the mixture from step (b) is heated to a temperature to 350 to 550°C and then held constant for a time of 10 min to 4 hours, and then it is raised to 750°C up to 950°C.

In one embodiment of the present invention, step (c) has a duration in the range of from 3 hours to 24 hours, preferred are 6 to 9 hours. In this context, the time required for reaching the targeted temperature is neglected.

In embodiments wherein in step (b) at least one solvent has been used, as part of step (c), or separately and before commencing step (c), such solvent(s) are removed, for example by filtration, evaporation or distilling of such solvent(s). Preferred are evaporation and distillation.

In one embodiment of the present invention, step (c) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (c) is performed in an oxygen-containing atmosphere, for example in pure oxygen or in oxygen-enriched air, for example in a 1:3 to 1:10 by volume mixture of air and oxygen, preference being given to pure oxygen.

By the inventive process, electrode materials meeting the above objectives are obtained. In addition, they are found to have a very low sulfate content.

The electrode active materials obtained by the inventive process may be further modified by a subsequent water treatment step (d) or a subsequent coating step (e) is performed. Preferably, a coating step (e) is performed by which a layer an oxide compound of Al, Co, Zr or a boron oxide/borate is applied to said particulate compound. Said optional steps (d) and (e) will be described in more detail below.

In said optional step (d), said electrode active material obtained from step (c) is treated with an aqueous medium, preferably with water, followed by removal of said water, for example by a solid-liquid separation step. Said aqueous medium may have a pH value in the range of from 2 up to 14, preferably at least 3.5, more preferably from 5 to 7. The pH value is measured at the beginning of step (d). It is observed that in the course of step (d), the pH value raises to at least 10, for example to 11 to 13. In embodiments wherein the pH value is in the range of from 10 to 11 at the beginning of step (d) it raises to more than 11 to up to 13. In embodiments wherein the pH value is in the range of 3 to below 10 at the beginning of step (d) it raises to 11 to up to 13 in the course of step (d).

It is preferred that the water hardness of said aqueous medium used in step (d) is at least partially removed, especially calcium. The use of desalinized water is preferred.

In one embodiment of the present invention, step (d) is performed at a temperature in the range of from 5 to 85°C, preferred are 10 to 60°C.

In one embodiment of the present invention, step (d) is performed at normal pressure. It is preferred, though, to perform step (b) under elevated pressure, for example at 10 mbar to 10 bar above normal pressure, or with suction, for example 50 to 250 mbar below normal pressure, preferably 100 to 200 mbar below normal pressure.

Step (d) may be performed, for example, in a vessel that can be easily discharged, for example due to its location above a filter device. Such vessel may be charged with starting material followed by introduction of aqueous medium. In another embodiment, such vessel is charged with aqueous medium followed by introduction of starting material. In another embodiment, starting material and aqueous medium are introduced simultaneously.

In one embodiment of the present invention, in step (d), the amounts of water and electrode active material have a weight ratio in the range of from 1:5 to 5:1, preferably from 2:1 to 1:2.

Step (d) may be supported by mixing operations, for example shaking or in particular by stirring or shearing, see below.

In one embodiment of the present invention, step (d) has a duration in the range of from 1 minute to 90 minutes, preferably 1 minute to less than 60 minutes. A duration of 5 minutes or more is possible in embodiments wherein in step (d), water treatment and water removal are performed overlapping or simultaneously.

In one embodiment of the present invention, treatment according to step (d) and subsequent water removal are performed consecutively.

After or during the treatment with an aqueous medium in accordance to step (d), water may be removed by any type of filtration, for example on a band filter or in a filter press.

In one embodiment of the present invention, at the latest 5 minutes after commencement of step (d), water removal is started. Said water removal includes partially removing the water from treated particulate material, for example by way of a solid-liquid separation, for example by decanting or preferably by filtration. Said "partial removal" may also be referred to as partially separating off.

In one embodiment said water removal, the slurry obtained from the water treatment is discharged directly into a centrifuge, for example a decanter centrifuge or a filter centrifuge, or on a filter device, for example a suction filter or in a filter press or in a belt filter that is located preferably directly below the vessel in which step (d) is performed. Then, filtration is commenced.

In a particularly preferred embodiment of the present invention, steps (d) is performed in a filter press or in a filter device with stirrer, for example a pressure filter with stirrer or a suction filter with stirrer (German for example: "Rührfilternutsche"). At most 5 minutes after, preferably at most 3 minutes after - or even immediately after - having combined electrode active material and aqueous medium in accordance with step (d), removal of aqueous medium is commenced by starting the filtration. On laboratory scale, step (d) may be performed on a Büchner funnel, and step (d) may be supported by manual stirring.

In a preferred embodiment, step (d) is performed in a filter device, for example a stirred filter device that allows stirring of the slurry in the filter or of the filter cake.

In one embodiment of the present invention, the water removal has a duration in the range of from 1 minute to 1 hour.

In one embodiment of the present invention, steps (d) is carried out under an atmosphere with reduced CO₂ content, e.g., a carbon dioxide content in the range of from 0.01 to 500 ppm by weight, preferred are 0.1 to 50 ppm by weight. The CO₂ content may be determined by, e.g., optical methods using infrared light. It is even more preferred to perform step (d) under an atmosphere with a carbon dioxide content below detection limit for example with infrared-light based optical methods.

Step (d) may be completed by drying, for example at 80 to 150°C, at reduced pressure ("in vacuo") or under atmospheric pressure, for 1 up to 24 hours. More preferably, Step (d) is completed by another thermal treatment at a temperature in the range of from 200 to 900°C.

Optional step (e) includes applying a coating to the electrode active material obtained from step (c) or from step (d), respectively, or simultaneously with the water treatment in step (d). Said coating may have an average thickness in the range of from 2 nm up to 1 µm, and it may comprise Al₂O₃ or ZrO₂ or a boron oxide/borate or a cobalt oxide compound, for example C₃O₄, LiCoO₂, or underlithiated lithium cobalt oxides. Examples of borates are LiBO₂ and Li₂B₄O₇. Said coating may be applied by dry coating methods, by soaking the electrode active material obtained from step (c)or (d) with a solution or slurry of a water-soluble compound of Al, Zr, B, or Co, for example Al(NO₃)₃, Zr(SO₄)₂, ZrO(NO₃)₂, B(OH)₃, or Co(NO₃)₂ or of the respective acetates. A further option is a consecutive gas-phase treatment with volatile compounds like Al(CH₃)₃ or Zr[N(CH₃)₂]₄ and then by moisture or an oxidant such as ozone or ozone/oxygen mixtures.

By said optional step (e), a layer of an oxide compound of Al, Co, Zr, or a boron oxide/borate is applied to the particulate composite oxide. Said layer may be homogeneous or nonhomogeneous, e.g., it may have an island structure or gaps. Examples of oxide compounds of Al, Co, and Zr are Al₂O₃, aluminates like LiAlO₂, ZrO₂, zirconates like Li₂ZrO₃, Co₃O₄, LiCoO₂, sub-stoichiometric lithium-cobalt-oxides that are often referred to as LiₓCoO₂ with x being from 0.1 to 0.4, and combinations of at least two of the foregoing. Examples of boron oxide/borates are B₂O₃, LiBO₂, Li₂B₄O7, and combinations of at least two of the foregoing.

Another aspect of the present invention is related to electrode active materials, hereinafter also referred to as inventive electrode active materials or inventive cathode active materials. Inventive electrode active materials are particulate composite oxide of general formula Li₁₊ₓTM₁₋ₓO₂ with x being in the range of from -0.02 to +0.15 and with TM representing nickel and one metal selected from Co and Mn or a combination of at least two of the aforementioned and, optionally, including at least one of Al, Mg, Ti, Zr, Nb, Ta, Mo, and W, wherein said particulate composite oxide is in the form of agglomerates of primary particles with irregular shape and a mass weighted equivalent diameter in the range of from 0.4 to 3 µm and a span (d90)-(d10) divided by (d50) in the range of from 0.7 to 1.7 and wherein said agglomerates have an irregular shape and an average diameter in the range of from 2 to 10 µm and a sulfate content in the range of from 50 to 500 ppm, preferably from 100 to 400 ppm. In the context of the present invention, ppm refer to ppm by weight.

In one embodiment of the present invention, inventive cathode active materials have a sodium content sodium content in the range of from 50 to 600 ppm, preferably 50 to 400 ppm. In the context of the present invention, ppm are ppm by weight.

A further aspect of the present invention refers to electrodes comprising at least one electrode active material according to the present invention. They are particularly useful for lithium ion batteries. Lithium ion batteries comprising at least one electrode according to the present invention exhibit a good discharge behavior. Electrodes comprising at least one electrode active material according to the present invention are hereinafter also referred to as inventive cathodes or cathodes according to the present invention.

Specifically, inventive cathodes contain
(A) at least one inventive electrode active material,
(B) carbon in electrically conductive form,
(C) a binder material, also referred to as binders or binders (C), and, preferably,
(D) a current collector.

In a preferred embodiment, inventive cathodes contain
(A) 80 to 98 % by weight inventive electrode active material,
(B) 1 to 17 % by weight of carbon,
(C) 1 to 15 % by weight of binder material,
percentages referring to the sum of (A), (B) and (C).

Cathodes according to the present invention can comprise further components. They can comprise a current collector, such as, but not limited to, an aluminum foil. They can further comprise conductive carbon and a binder.

Cathodes according to the present invention contain carbon in electrically conductive modification, in brief also referred to as carbon (B). Carbon (B) can be selected from soot, active carbon, carbon nanotubes, graphene, and graphite, and from combinations of at least two of the foregoing.

Suitable binders (C) are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol-% of copolymerized ethylene and up to 50 mol-% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, C₁-C₁₀-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol-% of copolymerized propylene and up to 50 mol-% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, C₁-C₁₀-alkyl esters of (meth)acrylic acid, divinylbenzene, especially 1,3-divinylbenzene, 1,2-diphenylethylene and α-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight M_{w} in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising inventive electrode active material, carbon, and binder, at least one anode, and at least one electrolyte.

Embodiments of inventive cathodes have been described above in detail.

Said anode may contain at least one anode active material, such as carbon (graphite), TiO₂, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-C₁-C₄-alkylene glycols and in particular polyethylene glycols. Polyethylene glycols can here comprise up to 20 mol-% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol.

The molecular weight M_{w} of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (II) and (III) 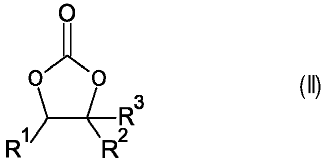 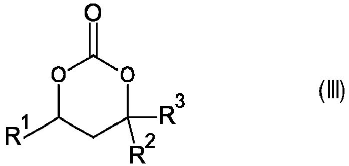 where R¹, R² and R³ can be identical or different and are selected from among hydrogen and C₁-C₄-alkyl, for example methyl, ethyl, n-propyl, isopropyl, n-butyl, isobutyl, sec-butyl and tert-butyl, with R² and R³ preferably not both being tert-butyl.

In particularly preferred embodiments, R¹ is methyl and R² and R³ are each hydrogen, or R¹, R² and R³ are each hydrogen.

Another preferred cyclic organic carbonate is vinylene carbonate, formula (IV).

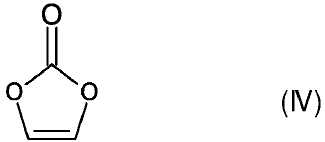

The solvent or solvents is/are preferably used in the water-free state, i.e. with a water content in the range from 1 ppm to 0.1% by weight, which can be determined, for example, by Karl-Fischer titration.

Electrolyte (C) further comprises at least one electrolyte salt. Suitable electrolyte salts are, in particular, lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄ and salts of the general formula (CₙF₂ₙ₊₁SO₂)ₜYLi, where m is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

In an embodiment of the present invention, batteries according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good discharge behavior, for example at low temperatures (zero °C or below, for example down to -10°C or even less), a very good discharge and cycling behavior.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The invention is further illustrated by working examples.

The electrodes were made in a dry room, dew point -40°C, moisture content below 500 ppm.

The nanoparticulate oxides according to Table 1 were used as starting materials, steps (a.1) to (a.3).

**Table 1: PSD measurements of nanoparticulate oxide starting materials**

| Material | Primary particle diameter [nm] | d10 [µm] | d50 [µm] | d90 [µm] |
|---|---|---|---|---|
| NiO | 5 to 50 | 1.3 | 4.1 | 13.4 |
| Co₃O₄ | 20 to 50 | 2.5 | 5.5 | 10.7 |
| Mn₃O₄ | 20 to 100 | 1.5 | 12.4 | 33.2 |

| | | | | |
|---|---|---|---|---|
| All oxide starting materials from Table 1 were purchased from US Research Nanomaterials, Inc. | | | | |

### I. Manufacture of inventive cathode active materials

### I.1 Manufacture of CAM1.1 to CAM1.3: Ni:Co molar ratio of 90:10

Step (b.1): 15.01 g (0.20 mol) NiO and 1.75 g (0.007 mol) Co₃O₄ provided in step (a.1) were mixed in a ball mill (SiO₂ jar and SiO₂ balls (10 mm diameter) for 30 min at 300 rpm. Then 9.32 g (0.22 mol) LiOH·H₂O were added and mixed for additional 30 min in the ball mill at 300 rpm. Premix1 was obtained. Premix1 was then split into three portions of about equal size.

Step (c1.1): The first portion was calcined in a muffle oven under a constant flow of oxygen atmosphere for 6 h at 700 °C. The heat rate was 3 °C/min. The resultant CAM1.1 was allowed to cool down to ambient temperature.

Step (c1.2): The second portion of the Premix1 was calcined in the muffle oven under a constant flow of oxygen atmosphere for 6 h at 800 °C. The heat rate was 3 °C/min. The resultant CAM1.2 was allowed to cool down to ambient temperature.

Step (c1.3): The third portion of the Premix1 was calcined in the muffle oven under a constant flow of oxygen atmosphere for 6 h at 900 °C. The heat rate was 3 °C/min. The resultant CAM1.3 was allowed to cool down to ambient temperature.

### 1.2 Manufacture of CAM2.1 to CAM2.3: Ni:Mn molar ratio of 90:10

Step (b.2): 14.99 g (0.20 mol) NiO and 1.65 g (0.007 mol) Mn₃O₄ were mixed in a ball mill (ZrO₂ jar and ZrO₂ balls (10 mm diameter) for 30 min at 300 rpm. Then 9.31 g (0.22 mol) LiOH·H₂O were added and mixed for additional 30 min in the ball mill at 300 rpm. Premix2 was obtained. Premix2 was then split in three portions of about equal size.

Step (c2.1): The first portion of Premix2 was calcined in a muffle oven under a constant flow of oxygen atmosphere for 6 h at 700 °C. The heat rate was of 3 °C/min. The resultant CAM2.1 was allowed to cool down to ambient temperature.

Step (c2.2): The second portion of the Premix2 was calcined in the muffle oven under a constant flow of oxygen atmosphere for 6 h at 800 °C. The heat rate was of 3 °C/min. The resultant CAM2.2 was allowed to cool down to ambient temperature.

Step (c2.3): The third portion of the Premix2 was calcined in the muffle oven under a constant flow of oxygen atmosphere for 6 h at 900 °C. The heat rate was 3 °C/min. The resultant CAM2.3 was allowed to cool down to ambient temperature.

### 1.3 Manufacture of CAM3.1 to CAM3.3: Ni:Co:Mn ratio of 90:5:5:

Step (b.3): 15.02 g (0.20 mol) NiO, 0.87 g (0.004 mol) Co₃O₄ and 0.83 g (0.004 mol) Mn₃O₄ were mixed in a ball mill (ZrO₂ jar and ZrO₂ balls (10 mm diameter) for 30 min at 300 rpm. Then 9.32 g (0.22 mol) LiOH·H₂O were added and mixed for additional 30 min in the ball mill at 300 rpm. Premix3 was obtained. Premix3 was then split into three portions of about equal size.

Step (c3.1): The first portion of Premix3 was calcined in a muffle oven under a constant flow of oxygen atmosphere for 6 h at 700 °C. The heat rate was of 3 °C/min. The resultant CAM3.1 was allowed to cool down to ambient temperature.

Step (c3.2): The second portion of the Premix3 was calcined in the muffle oven under a constant flow of oxygen atmosphere for 6 h at 800 °C. The heat rate was of 3 °C/min. The resultant CAM3.2 was allowed to cool down to ambient temperature.

Step (c3.3): The third portion of the Premix3 was calcined in the muffle oven under a constant flow of oxygen atmosphere for 6 h at 900 °C. The heat rate was of 3 °C/min. The resultant CAM3.3 was allowed to cool down to ambient temperature.

Analytical properties of the inventive cathode active materials and of comparative cathode active materials are summarized in Table 2.

**Table 2: analytical properties of comparative and inventive cathode active materials**

| Sample | Composition | Step (c) [°C] | Li [wt%] | Ni [wt%] | Co [wt%] | Mn [wt%] | LiOH [wt%] | Li₂CO₃ [wt%] |
|---|---|---|---|---|---|---|---|---|
| c-CAM1.1 | NC9010 | 700 | 7.27 | 52.1 | 6.15 | 0 | 0.8594 | 0.348 |
| c-CAM1.2 | NC9010 | 800 | 7.09 | 52.18 | 6.04 | 0 | 0.6678 | 0.3088 |
| c-CAM1.3 | NC9010 | 900 | 6.87 | 53.07 | 6.11 | 0 | 1.553 | 0.2527 |
| CAM1.1 | NC9010 | 700 | 7.02 | 52.39 | 5.95 | 0 | 0.7881 | 0.5116 |
| CAM1.2 | NC9010 | 800 | 6.85 | 52.83 | 6.03 | 0 | 0.4582 | 0.2584 |
| CAM1.3 | NC9010 | 900 | 7.06 | 53.17 | 6.05 | 0 | 2.8062 | 0.2138 |
| c-CAM2.1 | NM9010 | 700 | 7.04 | 52.53 | 0 | 5.43 | 1.8034 | 0.9386 |
| c-CAM2.2 | NM9010 | 800 | 6.92 | 53.41 | 0 | 5.46 | 0.6364 | 0.1994 |
| c-CAM2.3 | NM9010 | 900 | 6.89 | 53.32 | 0 | 5.5 | 1.2776 | 0.191 |
| CAM2.1 | NM9010 | 700 | 7.04 | 52.27 | 0 | 5.36 | 1.2001 | 0.7583 |
| CAM2.2 | NM9010 | 800 | 6.79 | 49.52 | 0 | 5.09 | 0.3973 | 0.4555 |
| CAM2.3 | NM9010 | 900 | 7.21 | 53.05 | 0 | 5.43 | 2.3179 | 0.5206 |
| c-CAM3.1 | NCM9055 | 700 | 7.07 | 53.2 | 2.37 | 2.75 | 1.4195 | 1.1182 |
| c-CAM3.2 | NCM9055 | 800 | 7.04 | 53.1 | 2.37 | 2.75 | 1.4323 | 1.1651 |
| c-CAM3.3 | NCM9055 | 900 | 6.99 | 54.04 | 2.4 | 2.79 | 1.2249 | 0.645 |
| CAM3.1 | NCM9055 | 700 | 7.27 | 52.39 | 2.87 | 2.73 | 1.0655 | 1.0821 |
| CAM3.2 | NCM9055 | 800 | 7.32 | 52.26 | 2.88 | 2.74 | 1.1608 | 0.7247 |
| CAM3.3 | NCM9055 | 900 | 7.02 | 53.32 | 2.96 | 2.8 | 2.0288 | 0.6855 |

### II. Comparison Experiments: Manufacture of Precursors by Co-Precipitation, and manufacture of cathode active materials

The following aqueous solutions were provided:
solution (α1): NiSO₄ and CoSO₄ dissolved in deionized water (molar ratio 9:1, total transition metal concentration: 1.65 mol/kg)
Solution (α2): α) NiSO₄ and MnSO₄ dissolved in deionized water (molar ratio 9:1, total transition metal concentration: 1.65 mol/kg)
Solution (α3): NiSO₄, CoSO₄ and MnSO₄ dissolved in deionized water (molar ratio 91:04:05, total transition metal concentration: 1.65 mol/kg)
Solution (β1): 25wt% NaOH dissolved in deionized water
Solution (γ1): of 25wt% ammonia in deionized water

### II.1 Manufacture of c-P-CAM1

A 3.2 I-stirred tank reactor was charged with 1.6 I deionized water containing 33 g ammonia and heated to 55 °C under nitrogen atmosphere. Subsequently, solution (β1) and solution (α1) was added in a way that the pH value at 23 °C was set to 12.05 and the stirrer was set to 1000 rpm. The tank reactor was then fed with solutions (α1), (β1) and (γ1) in a way that the pH value of the mother liquor was 12.05 and the molar ratio of NH₃ to the sum of Ni and Co in the reactor was 0.55. Mother liquor was separated from the solid and removed from the reactor by a clarifier attached to the top of the reactor. The individual flow rates of the solutions were adjusted to meet a residence time of 5 h. The stirrer speed was kept constant. The reaction was conducted for 18 hours. A hydroxide with a mean particle size (d50) = 11.0 µm was obtained and separated by filtration, washed with deionized water and an aqueous solution of sodium hydroxide (1kg solution (β1) per kg of filter cake) and dried at 120 °C for 16 hours to obtain the comparative precursor c-P-CAM1 with molar composition of Ni:Co = 89.3:10.7, an average particle size (d50) = 11.1 µm and span = 0.7.

### 11.2 Manufacture of c-P-CAM2

Solution (α2), solution (β1) and solution (γ1) were simultaneously introduced into a 3.2 I-stirred tank reactor through the separate tubes. The molar ratio between ammonia and transition metal was adjusted to 0.15. The sum of volume flows was set to adjust the mean residence time to 5 hours. The flow rate of solution (β1) was adjusted by a pH regulation circuit to keep the pH value at 23 °C in the stirred tank reactor at a constant value of 12.1. The tank reactor was operated continuously keeping the liquid level in the tank reactor constant. A mixed hydroxide of Ni and Mn was collected via free overflow from the vessel. The resulting slurry contained about 120g/l mixed hydroxide of Ni and Mn. The slurry was filtered and the filter cake was washed with deionized water and 1 kg of solution (β1) per kg of solid hydroxide) and dried at 120 °C for 16 hours to obtain the comparative precursor c-P-CAM2 with molar composition of Ni:Mn = 90.2:9.8, an average particle size (d50) = 10.1 µm and span = 1.22.

### 11.3 Manufacture of c-P-CAM3

Solution (α3) solution (β1) and solution (γ1) were simultaneously introduced into a 3.2 I-stirred tank reactor through separate tubes. The molar ratio between ammonia and transition metal was adjusted to 0.25. The sum of volume flows was set to adjust the mean residence time to 5 hours. The flow rate of solution (β1) was adjusted by a pH regulation circuit to keep the pH value in the stirred tank reactor at a constant value of 117. The tank reactor was operated continuously keeping the liquid level in the tank reactor constant. A mixed hydroxide of Ni, Co and Mn was collected via free overflow from the vessel. The resulting slurry contained about 120g/l mixed hydroxide of Ni, Co and Mn. The slurry was filtered, the filter cake was washed with deionized water and an aqueous solution of sodium hydroxide (1kg of solution (β1) per kg of solid hydroxide) and dried at 120 °C for 16 hours to obtain the comparative precursor c-P-CAM3 with molar composition of Ni:Co:Mn = 91.0:4.0:5.0, an average particle size (d50) = 10.6 µm and span = 1.26.

### 11.4 Manufacture of c-CAM1.1 to c-CAM1.3

c-P-CAM1 was mixed with lithium hydroxide monohydrate using a molar ratio of Li : (Ni+Co) = 1.02 to obtain the Premix-c1. Premix-c1 was then split into three portions of about equal size.

The first portion of Premix-c1 was calcined in a muffle oven under a constant flow of oxygen atmosphere for 6 h at 700 °C. The heating rate was of 3 °C/min. The resultant c-CAM1.1 was allowed to cool down to ambient temperature.

The second portion of Premix-c1 was calcined in a muffle oven under a constant flow of oxygen atmosphere for 6 h at 800 °C. The heating rate was of 3 °C/min. The resultant c-CAM1.2 was allowed to cool down to ambient temperature.

The third portion of Premix-c1 was calcined in a muffle oven under a constant flow of oxygen atmosphere for 6 h at 900 °C. The heating rate was of 3 °C/min. The resultant c-CAM1.3 was allowed to cool down to ambient temperature.

### 11.5 Manufacture of c-CAM2.1 to c-CAM2.3

c-P-CAM2 was mixed with lithium hydroxide monohydrate using a molar ratio of Li : (Ni+Co) = 1.02 to obtain the Premix-c2. Premix-c2 was then split into three portions of about equal size.

The first portion of Premix-c2 was calcined in a muffle oven under a constant flow of oxygen atmosphere for 6 h at 700 °C. The heating rate was of 3 °C/min. The resultant c-CAM2.1 was allowed to cool down to ambient temperature.

The second portion of Premix-c2 was calcined in a muffle oven under a constant flow of oxygen atmosphere for 6 h at 800 °C. The heating rate was of 3 °C/min. The resultant c-CAM2.2 was allowed to cool down to ambient temperature.

The third portion of Premix-c2 was calcined in a muffle oven under a constant flow of oxygen atmosphere for 6 h at 900 °C. The heating rate was of 3 °C/min. The resultant c-CAM2.3 was allowed to cool down to ambient temperature.

### II.6 Manufacture of c-CAM3.1 to c-CAM3.3

c-P-CAM3 was mixed with lithium hydroxide monohydrate using a molar ratio of Li : (Ni+Co) = 1.02 to obtain the Premix-c2. Premix-c2 was then split into three portions of about equal size.

The first portion of Premix-c3 was calcined in a muffle oven under a constant flow of oxygen atmosphere for 6 h at 700 °C. The heating rate was of 3 °C/min. The resultant c-CAM3.1 was allowed to cool down to ambient temperature.

The second portion of Premix-c3 was calcined in a muffle oven under a constant flow of oxygen atmosphere for 6 h at 800 °C. The heating rate was of 3 °C/min. The resultant c-CAM3.2 was allowed to cool down to ambient temperature.

The third portion of Premix-c3 was calcined in a muffle oven under a constant flow of oxygen atmosphere for 6 h at 900 °C. The heating rate was of 3 °C/min. The resultant c-CAM3.3 was allowed to cool down to ambient temperature.

**Table 3: Sulfur and sodium analytics**

| | c-CAM1.2 | CAM1.2 | c-CAM2.2 | CAM2.2 | c-CAM3.2 | CAM3.2 |
|---|---|---|---|---|---|---|
| S [% wt] | 0.2 | 0.01 | 0.14 | 0.03 | 0.17 | 0.02 |
| Sulfate [%wt] | 0.6 | 0.02 | 0.43 | 0.1 | 0.5 | 0.06 |
| Na [% wt] | 0.015 | 0.037 | 0.015 | 0.073 | 0.023 | 0.056 |

| | | | | | | |
|---|---|---|---|---|---|---|
| S was determined by coulometry, sulfate by IC. | | | | | | |

### III. Manufacture of cathodes and of coin half-cells

### III.1 Cathode manufacture, general protocol:

Cathode manufacture: Cathodes contained 94% of the respective CAM or C-CAM, 3% carbon black (Super C65) and 3% binder (polyvinylidene fluoride, Solef 5130). Slurries with a total solids content of 61% were mixed in N-methyl-2-pyrrolidone (planetary mixer, 24 minutes, 2,000 rpm) and cast onto aluminum foil tape by a box-type coater. After drying of the electrode tapes for 16 h at 120 °C in vacuo and calendaring, circular electrodes with a diameter of 14 mm were punched, weighed and dried at 120 °C under vacuum for 12 hours before entering in an Ar filled glove box. Average loading: 8 mg/cm², electrode density: 3 g/cm³.

### 111.2 Coin half-cell manufacture

Coin-type electrochemical half-cells were assembled in an argon-filled glovebox. Anode: 0.58 mm thick Li foil, separated from the cathode by a glass fiber separator (Whatman GF/D). An amount of 95 µl of 1 M LiPF₆ in ethylene carbonate (EC): ethylmethyl carbonate (EMC), 3:7 by weight, was used as the electrolyte. After assembly, the cells were crimped closed in an automated crimper. The cells were then transferred to a climate chamber and connected to a battery cycler (Series4000, MACCOR).

### 111.3 Coin cell testing.

All tests were performed at 25 °C. Cells were galvanostatically cycled at a Maccor 4000 battery cycler between 3.1 and 4.3 V at room temperature by applying the following C-rates until 70 % of the initial discharge capacity is reached at a certain discharge step:
The test protocol consisted of an initial formation & rate test part, starting with two cycles at C/10. For all cycles, the voltage window was set to 3.0 - 4.3 V. As an initial 1C rate, 200 mA g⁻¹ were assumed.

**Table 4: Electrochemical results of inventive and comparative examples**

| CAM | Cell | Charge Capacity [mA·h/g] | Discharge Capacity [mA·h/g] |
|---|---|---|---|
| CAM1.1 | BAT1.1 | 234.2 | 210.1 |
| c-CAM1.2 | c-BAT1.2 | 215.2 | 186.7 |
| CAM1.2 | BAT1.2 | 214.0 | 187.3 |
| CAM1.3 | BAT1.3 | 223.2 | 192.6 |
| c-CAM2.1 | c-BAT2.1 | 238.4 | 209.9 |
| CAM2.1 | BAT2.1 | 240.2 | 213.4 |
| c-CAM2.2 | c-BAT2.2 | 234.9 | 192.6 |
| CAM2.2 | BAT2.2 | 235.8 | 205.1 |
| CAM2.3 | BAT2.3 | 236.4 | 207.2 |
| c-CAM3.1 | c-BAT3.1 | 221.6 | 180.0 |
| CAM3.1 | BAT3.3 | 222.4 | 179.3 |
| c-CAM3.2 | c-BAT3.2 | 222.1 | 181.1 |
| CAM3.2 | BAT3.2 | 225.4 | 185.5 |
| CAM3.3 | BAT3.3 | 224.3 | 184.1 |

## Claims

1. Process for making a particulate compound according to general formula Li₁₊ₓTM₁₋ₓO₂ with x being in the range of from -0.02 to +0.15 and with TM representing nickel and at least one metal selected from Co and Mn and, optionally, including at least one of Al, Mg, Ti, Zr, Nb, Ta, Mo, and W, wherein said process comprises the steps of:
(a) providing a nanoparticulate oxide or (oxy)hydroxide of each of the metals of TM,
(b) mixing the nanoparticulate oxides or (oxy)hydroxides in the stoichiometry targeted for TM under addition of a source of lithium selected from LiOH and Li₂CO₃ and Li₂O₂ and Li₂O, and
(c) treating the mixture from step (b) at a temperature in the range of from 700 to 950°C.

2. Process according to claim 1 wherein step (b) is performed in a ball mill, agitating mill, high-shear mixer, or extruder.

3. Process according to claim 1 or 2 wherein TM is a combination of metals according to general formula (I)
(NiₐCo_{b}Mn_{c})_{1-d}M_{d} (I)
with
a being in the range of from 0.6 to 0.98,
b being in the range of from zero to 0.2,
c being in the range of from zero to 0.25, and
d being in the range of from zero to 0.1,
M is selected from Mg, Al, Ti, Zr, Mo, W, Nb, and Ta,
a + b + c = 1, and b + c > 0.

4. Process according to any of the preceding claims wherein said oxides and (oxy)hydroxides provided in step (a) is in the form of aggregates that have an average particle diameter (D50) in the range of from 1 to 10 µm.

5. Process according to any of the preceding claims wherein oxide of Mn is provided as Mn₂O₃ or Mn₃O₄ in nanoparticulate form.

6. Process according to any of the preceding claims wherein said particulate oxide is form of agglomerates of primary particles with irregular shape and a mass weighted equivalent diameter in the range of from 0.4 to 3 µm.

7. Process according to any of the preceding claims wherein a subsequent water treatment step (d) or a subsequent coating step (e) is performed.

8. Process according to claim 7 wherein in a coating step (e), a layer of an oxide compound of Al, Co or Zr or a boron oxide/borate is applied to said particulate compound.

9. Particulate composite oxide of general formula Li₁₊ₓTM₁₋ₓO₂ with x being in the range of from -0.02 to +0.15 and with TM representing nickel and at least one metal selected from Co and Mn and, optionally, including at least one of Al, Mg, Ti, Zr, Nb, Ta, Mo, and W, wherein said particulate composite oxide is in the form of agglomerates of primary particles with irregular shape and a mass weighted equivalent diameter in the range of from 0.4 to 3 µm and a span (d90)-(d10) divided by (d50) in the range of from and wherein said agglomerates have an irregular shape and an average diameter in the range of from 2 to 10 µm and a sulfate content in the range of from 50 to 500 ppm.

10. Particulate composite oxide according to claim 9 wherein TM is a combination of metals according to general formula (I)
(NiₐCo_{b}Mn_{c})_{1-d}M_{d} (I)
with
a being in the range of from 0.6 to 0.98,
b being in the range of from zero to 0.2,
c being in the range of from zero to 0.25, and
d being in the range of from zero to 0.1,
M is selected from Mg, Al, Ti, Zr, Mo, W, Nb, and Ta,
a + b + c = 1, and b + c > 0.

11. Particulate composite oxide according to claim 9 or 10 wherein said composite is at least partially coated with at least one oxide compound of Al, Co, Zr, or a boron oxide/borate.

12. Particulate compound according to any of claims 9 to 11 wherein such compound has a sodium content in the range of from 50 to 500 ppm.

13. Cathode comprising
(A) at least one particulate composite oxide according to any of the claims 9 to 12,
(B) carbon in electrically conductive form,
(C) at least one binder.

14. Electrochemical cell comprising a cathode according to claim 13.
